# FASCICULE DE BREVET EUROPEEN

(11) **EP 3 000 662 B1**
(45) Date de publication et mention de la délivrance du brevet: **21.08.2019**
(21) Numéro de dépôt: 15187220.7
(22) Date de dépôt: 28.09.2015
(51) Int. Cl.: B60R 5/04

(54) **SYSTÈME DE RECOUVREMENT D'UN COMPARTIMENT À BAGAGES DE VÉHICULE AUTOMOBILE**
ABDECKSYSTEM EINES KOFFERRAUMFACHS EINES KRAFTFAHRZEUGS
SYSTEM FOR COVERING A LUGGAGE COMPARTMENT OF A MOTOR VEHICLE

(30) Priorité: 29.09.2014 FR 1459217
(43) Date de publication de la demande: 30.03.2016
(73) Titulaire: TREVES Products, Services & Innovation, 75008 Paris (FR)
(72) Inventeur: BONFILS, Xavier, 51100 Reims (FR); BRILLON, Eric, 51390 Rosnay (FR)
(74) Mandataire: Sayettat, Julien Christian

(56) Documents cités:
- DE-A1- 19 650 775
- DE-A1-102008 036 005
- DE-C1- 19 745 152
- FR-A1- 2 403 241

## Description

L'invention concerne un système de recouvrement d'un compartiment à bagages d'un véhicule automobile.

Il est connu de réaliser un système de recouvrement d'un compartiment à bagages de véhicule automobile, ledit système comprenant un cache bagages et une structure environnant latéralement ledit cache bagages, ledit cache-bagages comprenant :
- un rideau souple rétractable comprenant un bord avant et un bord arrière,
- un dispositif de rappel dudit rideau associé audit bord avant, de sorte que ledit rideau soit mobile entre une configuration rétractée de rangement et une configuration déployée de recouvrement des bagages, ledit dispositif étant monté en avant de ladite structure,
- une bavette de rigidification associée le long dudit bord arrière, ladite bavette étant pourvue de deux moyens d'accrochage latéraux respectifs,
ladite structure étant agencée pour permettre l'accrochage desdits moyens selon une position reculée, correspondant à ladite configuration déployée, et selon une position avancée, correspondant à une configuration semi-déployée dudit rideau. Un exemple est divulgué par DE 196 50 775 A1.

La configuration déployée du rideau permet une occultation des bagages.

La configuration semi-déployée du rideau permet un accès facilité aux bagages tout en conservant la faculté de laisser des objets posés dessus.

Dans les réalisations connues, le passage de la configuration rétractée ou semi-déployée à la configuration déployée se fait notamment par traction manuelle vers l'arrière et/ou vers le bas exercée sur la bavette, notamment au moyen d'une poignée de préhension prévue en partie médiane de ladite bavette.

Un agencement connu prévoit que les moyens d'accrochage puissent s'engager, pour atteindre la configuration semi-déployée, dans des guides prévus sur les montants de baie arrière du véhicule.

D'autres agencements connus mettent en oeuvre des bras articulés par une extrémité, selon un axe transversal, par exemple en partie médiane des ébénisteries, lesdits bras étant aptes à recevoir sur l'autre extrémité les moyens d'accrochage.

Encore d'autres agencements connus prévoient que les moyens d'accrochage puisse s'accrocher en partie arrière des ébénisteries de garnissage du compartiment à bagages, pour réaliser la mise en configuration déployée du rideau, et en partie intermédiaire des ébénisteries, permettant de réaliser la mise en configuration semi-déployée du rideau.

Dans les réalisations connues, l'actionnement du système, pour faire passer le rideau, à partir de la configuration déployée, vers l'une ou l'autre des configurations rétractée ou semi-déployée, requiert généralement la sollicitation d'au moins un organe de commande localisé en un emplacement défini.

De ce fait, il peut en résulter une ergonomie de manipulation peu satisfaisante, en particulier lorsque l'utilisateur est gêné pour accéder à l'organe de commande, notamment lorsqu'il a les bras chargés de paquets.

L'invention a pour but de pallier cet inconvénient.

A cet effet, l'invention propose un système de recouvrement d'un compartiment à bagages de véhicule automobile selon la revendication 1. Des exemples préférés font l'objet des revendications dépendantes.

Dans cette description, les termes de positionnement dans l'espace (haut, bas, longitudinal, transversal, latéral, avant, arrière, dessus, vertical,...) sont pris en référence au système en place dans le véhicule, le rideau étant en configuration déployée.

Par le terme « bavette », on entend un élément rigide présentant une certaine étendue longitudinale, notamment variable, pouvant s'étendre sur plusieurs dizaines de millimètres, ladite bavette étant sous forme générale de plaque dont le bord arrière présente une courbure épousant la forme du hayon du véhicule, ceci de manière à assurer une occultation optimale des bagages. L'agencement proposé permet à l'utilisateur de réaliser le passage du rideau de la configuration déployée à la configuration rétractée ou semi-déployée par un simple appui vertical sur la bavette exercé dans un sens ou dans l'autre, ledit appui pouvant se faire selon une pluralité de zones d'appui sur ladite bavette, ce qui assure une ergonomie d'utilisation optimisée.

D'autres particularités et avantages de l'invention apparaîtront dans la description qui suit, faite en référence aux figures jointes, dans lesquelles :
- la figure 1 est une vue schématique en perspective d'un système selon une réalisation, le rideau de cache bagages étant en configuration semi-déployée,
- les figures 2 sont des vues schématiques en perspective partielle du système de la figure 1, le bras étant en position abaissée (2a) et relevée (2b),
- les figures 3 sont des vues latérales schématiques partielles du système des figures précédentes dans lesquelles :
   ∘ en figure 3a : le bras est en position abaissée et le dispositif de verrouillage est activé, l'élément rotatif étant en position de blocage du doigt,
   ∘ en figure 3b : le bras est en position abaissée et le dispositif de verrouillage est désactivé,
   ∘ en figure 3c : le bras est en mouvement vers sa position relevée,
   ∘ en figure 3d : le bras est en position relevée,
   ∘ en figure 3e : le bras est en position abaissée et le dispositif de verrouillage est activé, l'élément rotatif étant en position permettant le passage du doigt,
   ∘ en figure 3f : le bras est en position abaissée et le dispositif de verrouillage est activé, le doigt étant en cours de dégagement ou d'engagement dans la fente de l'élément rotatif,
   ∘ en figure 3g : le bras est en position abaissée et le dispositif de verrouillage est activé, le doigt étant en position intermédiaire prise lorsque le rideau est actionné entre sa configuration rétractée et sa configuration déployée.

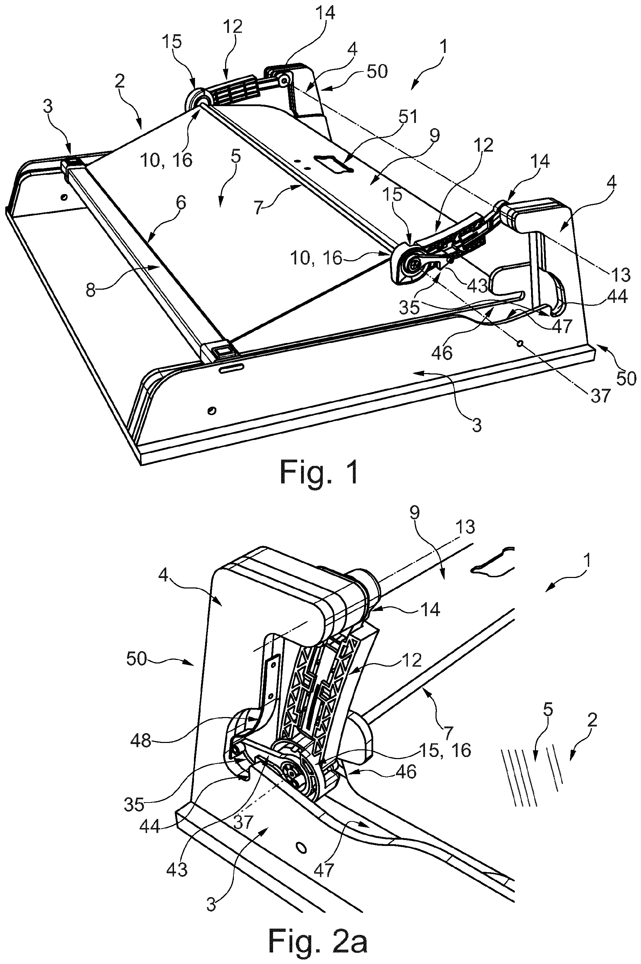

En référence aux figures 1 à 3, on décrit un système 1 de recouvrement d'un compartiment à bagages de véhicule automobile, ledit système comprenant un cache bagages 2 et une structure 50 environnant latéralement ledit cache bagages, ledit cache-bagages comprenant :
- un rideau 5 souple rétractable comprenant un bord avant 6 et un bord arrière 7,
- un dispositif de rappel 8 dudit rideau - comprenant notamment un arbre d'enroulement transversal actionné en enroulement par un ressort - associé audit bord avant, de sorte que ledit rideau soit mobile entre une configuration rétractée de rangement et une configuration déployée de recouvrement des bagages, ledit dispositif étant monté en avant de ladite structure,

- une bavette 9 de rigidification associée le long dudit bord arrière, ladite bavette étant pourvue de deux moyens d'accrochage 10 latéraux respectifs,
ladite structure étant agencée pour permettre l'accrochage desdits moyens selon une position reculée, correspondant à ladite configuration déployée, et selon une position avancée, correspondant à une configuration semi-déployée dudit rideau, ladite bavette étant actionnable, lorsque lesdits moyens sont accrochés en position reculée, en rotation selon un axe transversal :
- dans un premier sens entrainant lesdits moyens en décrochage pour permettre un retour dudit rideau en configuration rétractée,
- dans un deuxième sens opposé libérant un déplacement desdits moyens vers leur position avancée, de manière à permettre un positionnement dudit rideau en configuration semi-déployée.

On précise ici que le passage du rideau 5 de la configuration rétractée ou semi-déployée à la configuration déployée se fait par traction manuelle vers l'arrière et/ou vers le bas exercée sur la bavette 9, notamment au moyen d'une poignée de préhension 51 prévue en partie médiane de ladite bavette.

Selon la réalisation représentée, l'axe transversal 37 est disposé sensiblement selon le bord arrière 7 - c'est-à-dire en bord avant de la bavette 9 -, le premier sens correspondant au sens horaire en vue latérale dudit système par la gauche.

En pratique, l'utilisateur tape sur la bavette 9 pour ramener le rideau 5 en configuration rétractée et sous ladite bavette pour disposer ledit rideau en configuration semi-déployée, ce qui est particulièrement intuitif et ergonomique.

Selon la réalisation représentée, la bavette 9 est couplée en rotation avec les moyens d'accrochage 10, lesdits moyens étant agencés pour que leur rotation dans un sens ou dans l'autre entraine soit leur décrochage soit leur libération pour pouvoir se déplacer vers leur position avancée.

Selon la réalisation représentée, la structure 50 comprend, disposés latéralement de part et d'autre du compartiment :
- une ébénisterie 3 latérale de garnissage dudit compartiment,
- un montant 4 de baie arrière,
- un bras 12 monté en rotation selon un premier axe 13 transversal sur ledit montant, ledit axe étant situé au-dessus de ladite ébénisterie, ledit bras comprenant une première extrémité 14 de rotation et une deuxième extrémité 15 pourvue d'un moyen d'accrochage réciproque 16,
- un dispositif de verrouillage 35 réversible dudit bras en position abaissée, assurant un positionnement dudit moyen réciproque en partie arrière de l'ébénisterie 3 de manière à assurer, lorsque le moyen 10 et le moyen réciproque 16 coopèrent entre eux, un positionnement dudit moyen d'accrochage en position reculée et dudit rideau en configuration déployée, ledit dispositif de verrouillage étant désactivable de manière à permettre un déplacement dudit bras en position relevée pour réaliser un positionnement dudit moyen d'accrochage en position avancée et dudit rideau en configuration semi-déployée.

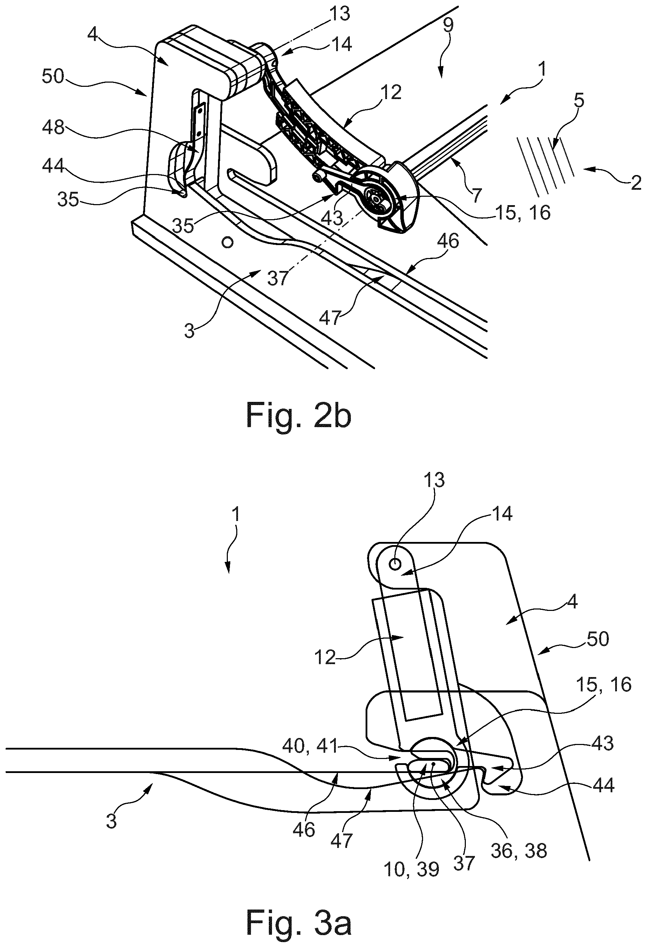

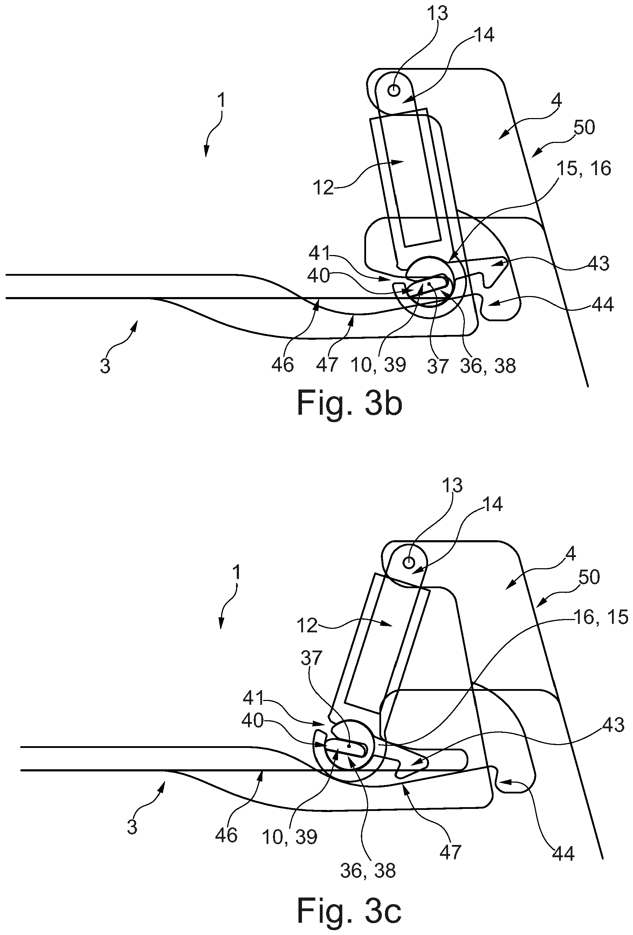

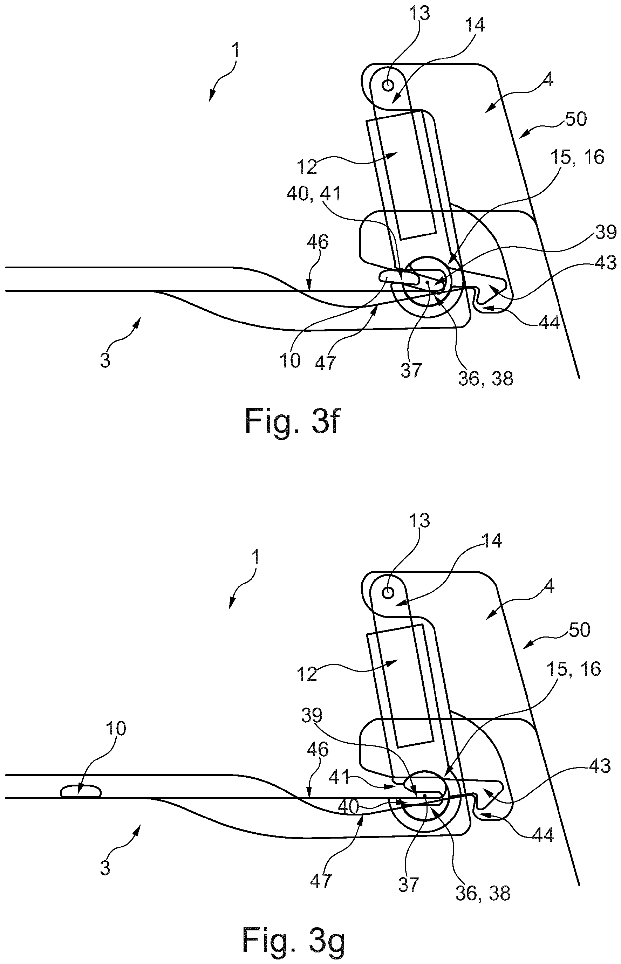

Selon la réalisation représentée, le système 1 présente latéralement de part et d'autre les caractéristiques suivantes :
- le moyen d'accrochage 10 est sous forme d'un doigt aplati saillant transversalement de la bavette 9 - ici en avant de ladite bavette - et couplé en rotation à ladite bavette,
- le moyen d'accrochage réciproque 16 est sous forme d'un élément 36 - ici en forme de disque - monté en rotation, selon un axe transversal annexe 37 - correspondant ici à l'axe de rotation de la bavette 9 - dans un logement 38 - ici épousant la forme extérieure du disque - prévu en deuxième extrémité 15 et débouchant vers l'intérieur du compartiment,
- ledit élément comprend une fente 39 de réception dudit doigt, ladite fente débouchant vers l'intérieur du compartiment,
- ladite fente comprend une première ouverture 40 radiale, ledit logement comprenant une deuxième ouverture 41 radiale de passage dudit doigt vers ladite première ouverture,
- ladite fente et ledit doigt sont dimensionnés de manière à se coupler en rotation lorsque ledit doigt est disposé dans ladite fente,
- ledit élément est sollicité par un moyen ressort, non représenté, pour adopter une position angulaire de blocage dudit doigt (figures 3a à 3d) où ladite première ouverture est obstruée, au moins partiellement, par la paroi dudit logement,

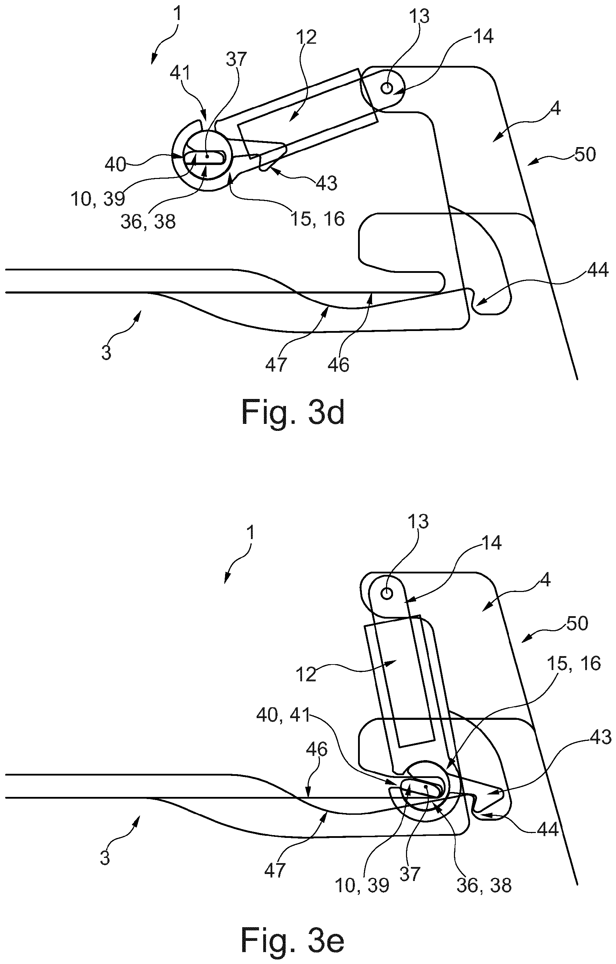

Selon la réalisation représentée, le moyen ressort sollicite l'élément 36 de sorte que la première ouverture 40 soit seulement partiellement obstruée par la paroi du logement 38, ladite première ouverture présentant une forme agencée - ici en biseau - pour réaliser, en début d'introduction du doigt dans la fente 39, une rotation de l'élément 36 la désobstruant pour permettre le passage dudit doigt (figures 3e et 3f), ledit doigt une fois introduit se bloquant dans ladite fente par retour dudit élément en position de blocage (figure 3a).

Selon la réalisation représentée, le dispositif 35 de verrouillage comprend :
- un crochet 43, solidaire - au moins partiellement - en rotation de l'élément 36, ledit crochet étant dirigé vers le bas et saillant radialement dudit élément vers l'arrière,
- un cran 44 disposé en arrière de l'ébénisterie 3, ledit crochet s'insérant dans ledit cran quand ledit dispositif est activé, la désactivation dudit dispositif se faisant par mise en rotation dudit élément.

Dans la réalisation représentée, comme on peut l'observer sur les figures 3d et 3e, l'élément 36 présente la faculté de débattre angulairement sur une faible plage angulaire sans entrainer le crochet 43 en rotation, de manière à permettre une introduction/extraction du doigt dans/de la fente 39 sans mettre en mouvement ledit crochet.

Selon la réalisation représentée, les moyens d'accrochage 10 sont solidaires en rotation de la bavette 9, de sorte que, à partir de la configuration déployée du rideau 5 :
- le passage dudit rideau en configuration rétractée se fasse par mise en rotation, autour de l'axe annexe 37, de ladite bavette vers le bas
- le passage dudit rideau en configuration semi-déployée, se fasse par mise en rotation de ladite bavette, autour dudit axe annexe, vers le haut, de manière à désactiver le dispositif 35, la désactivation dudit dispositif se faisant par rotation du doigt entrainant une rotation de l'élément 36 et une rotation du crochet 43.

Selon la réalisation représentée, le moyen ressort est disposé entre le bras 12 et le premier axe 13 de rotation, ledit bras étant monté en débattement radial par rapport audit axe - par exemple au moyen d'une lumière de coulissement de l'axe 13 dans la première extrémité 14 -, de sorte que la deuxième extrémité 15 soit sollicitée en écartement dudit axe, l'élément 36 étant sollicité pour adopter la position angulaire de blocage par appui du crochet 43 sur le cran 44.

Selon la réalisation représentée, chaque ébénisterie 3 comprend :
- une première piste 46 de guidage d'un moyen d'accrochage 10 vers son moyen réciproque 16,
- une deuxième piste 47, décalée transversalement par rapport à ladite première piste, de guidage de la deuxième extrémité 15 de bras 12 lors du passage du rideau 5 de la configuration semi-déployée à la configuration déployée.

Selon la réalisation représentée, le système 1 comprend en outre, latéralement de part et d'autre, une lame ressort 48 respective - ici solidaire de l'ébénisterie 3 - d'actionnement du crochet 43 vers le cran 44 lors du passage du rideau 5 de la configuration semi-déployée à la configuration déployée.

## Revendications

1. Système (1) de recouvrement d'un compartiment à bagages de véhicule automobile, ledit système comprenant un cache bagages (2) et une structure (50) environnant latéralement ledit cache bagages, ledit cache-bagages comprenant :
• un rideau (5) souple rétractable comprenant un bord avant (6) et un bord arrière (7),
• un dispositif de rappel (8) dudit rideau associé audit bord avant, de sorte que ledit rideau soit mobile entre une configuration rétractée de rangement et une configuration déployée de recouvrement des bagages, ledit dispositif étant monté en avant de ladite structure,
• une bavette (9) de rigidification associée le long dudit bord arrière, ladite bavette étant pourvue de deux moyens d'accrochage (10) latéraux respectifs,
ladite structure étant agencée pour permettre l'accrochage desdits moyens selon une position reculée, correspondant à ladite configuration déployée, et selon une position avancée, correspondant à une configuration semi-déployée dudit rideau, ledit système étant **caractérisé en ce que** :
• ladite bavette est sous forme générale de plaque dont le bord arrière présente une courbure destinée à épouser la forme du hayon dudit véhicule, de manière à assurer une occultation optimale des bagages,
• lorsque lesdits moyens sont accrochés en position reculée, ladite bavette est actionnable en rotation selon un axe transversal (37), par appui vertical exercé sur elle :
∘ dans un premier sens entrainant lesdits moyens en décrochage pour permettre un retour dudit rideau en configuration rétractée,
∘ dans un deuxième sens opposé libérant un déplacement desdits moyens vers leur position avancée, de manière à permettre un positionnement dudit rideau en configuration semi-déployée.

2. Système selon la revendication 1, **caractérisé en ce que** l'axe transversal (37) est disposé sensiblement selon le bord arrière (7), le premier sens correspondant au sens horaire en vue latérale dudit système par la gauche.

3. Système selon l'une des revendications 1 ou 2, **caractérisé en ce que** la bavette (9) est couplée en rotation avec les moyens d'accrochage (10), lesdits moyens étant agencés pour que leur rotation dans un sens ou dans l'autre entraine soit leur décrochage soit leur libération pour pouvoir se déplacer vers leur position avancée.

4. Système selon l'une quelconque des revendications 1 à 3, **caractérisé en ce que** la structure (50) comprend, disposés latéralement de part et d'autre du compartiment :
• une ébénisterie (3) latérale de garnissage dudit compartiment,
• un montant (4) de baie arrière,
• un bras (12) monté en rotation selon un premier axe (13) transversal sur ledit montant, ledit axe étant situé au-dessus de ladite ébénisterie, ledit bras comprenant une première extrémité (14) de rotation et une deuxième extrémité (15) pourvue d'un moyen d'accrochage réciproque (16),
• un dispositif de verrouillage (35) réversible dudit bras en position abaissée, assurant un positionnement dudit moyen réciproque en partie arrière de l'ébénisterie (3) de manière à assurer, lorsque le moyen (10) et le moyen réciproque (16) coopèrent entre eux, un positionnement dudit moyen d'accrochage en position reculée et dudit rideau en configuration déployée, ledit dispositif de verrouillage étant désactivable de manière à permettre un déplacement dudit bras en position relevée pour réaliser un positionnement dudit moyen d'accrochage en position avancée et dudit rideau en configuration semi-déployée.

5. Système (1) selon les revendications 3 et 4, **caractérisé en ce qu'**il présente latéralement de part et d'autre les caractéristiques suivantes :
• le moyen d'accrochage (10) est sous forme d'un doigt aplati saillant transversalement de la bavette (9) et couplé en rotation à ladite bavette,
• le moyen d'accrochage réciproque (16) est sous forme d'un élément (36) monté en rotation, selon un axe transversal annexe (37), dans un logement (38) prévu en deuxième extrémité (15) et débouchant vers l'intérieur du compartiment,
• ledit élément comprend une fente (39) de réception dudit doigt, ladite fente débouchant vers l'intérieur du compartiment,
• ladite fente comprend une première ouverture (40) radiale, ledit logement comprenant une deuxième ouverture (41) radiale de passage dudit doigt vers ladite première ouverture,
• ladite fente et ledit doigt sont dimensionnés de manière à se coupler en rotation lorsque ledit doigt est disposé dans ladite fente,
• ledit élément est sollicité par un moyen ressort pour adopter une position angulaire de blocage dudit doigt où ladite première ouverture est obstruée, au moins partiellement, par la paroi dudit logement,

6. Système selon la revendication 5, **caractérisé en ce que** le moyen ressort sollicite l'élément (36) de sorte que la première ouverture (40) soit seulement partiellement obstruée par la paroi du logement (38), ladite première ouverture présentant une forme agencée pour réaliser, en début d'introduction du doigt dans la fente (39), une rotation de l'élément (36) la désobstruant pour permettre le passage dudit doigt, ledit doigt une fois introduit se bloquant dans ladite fente par retour dudit élément en position de blocage.

7. Système selon l'une des revendications 5 ou 6, **caractérisé en ce que** le dispositif (35) de verrouillage comprend :
• un crochet (43) solidaire - au moins partiellement - en rotation de l'élément (36), ledit crochet étant dirigé vers le bas et saillant radialement dudit élément vers l'arrière,
• un cran (44) disposé en arrière de l'ébénisterie (3), ledit crochet s'insérant dans ledit cran quand ledit dispositif est activé, la désactivation dudit dispositif se faisant par mise en rotation dudit élément.

8. Système selon la revendication 7, **caractérisé en ce que** le moyen ressort est disposé entre le bras (12) et le premier axe (13) de rotation, ledit bras étant monté en débattement radial par rapport audit axe, de sorte que la deuxième extrémité (15) soit sollicitée en écartement dudit axe, l'élément (36) étant sollicité pour adopter la position angulaire de blocage par appui du crochet (43) sur le cran (44).

## Patentansprüche

1. Abdecksystem (1) eines Kofferraumfachs eines Kraftfahrzeugs, wobei das System eine Gepäckabdeckung (2) und eine Struktur (50) umfasst, welche die Gepäckabdeckung seitlich umgibt, wobei die Gepäckabdeckung umfasst:
- einen einziehbaren elastischen Vorhang (5), umfassend einen vorderen Rand (6) und einen hinteren Rand (7),
- eine Rückzugsvorrichtung (8) des Vorhangs, die dem vorderen Rand zugeordnet ist, so dass der Vorhang zwischen einer eingezogenen Verstaukonfiguration und einer ausgefahrenen Abdeckkonfiguration des Gepäcks beweglich ist, wobei die Vorrichtung vor der Struktur angebracht ist,
- eine verstärkende Randleiste (9), die dem hinteren Rand entlang zugeordnet ist, wobei die Randleiste mit zwei jeweiligen seitlichen Hakenmitteln (10) versehen ist,
wobei die Struktur eingerichtet ist, um das Verhaken der Mittel gemäß einer zurückgesetzten Position, welche der ausgefahrenen Konfiguration entspricht, und gemäß einer vorgerückten Position, welche einer halb ausgefahrenen Konfiguration des Vorhangs entspricht, zu erlauben, wobei das System **dadurch gekennzeichnet ist, dass**:
- die Randleiste in allgemeiner Plattenform vorliegt, deren hinterer Rand eine Krümmung aufweist, die dazu bestimmt ist, sich der Form der Heckklappe des Fahrzeugs derart anzupassen, dass eine optimale Abdeckung des Gepäcks gewährleistet ist,
- wenn die Mittel in zurückgesetzter Position verhakt sind, die Randleiste gemäß einer transversalen Achse (37) durch vertikalen Druck auf diese rotierend betätigbar ist:
-- in eine erste Richtung, bei der die Mittel enthakt werden, um eine Rückkehr des Vorhangs in eingezogene Konfiguration zu erlauben,
-- in eine zweite entgegengesetzte Richtung, in welcher eine Verlagerung der Mittel in ihre vorgerückte Position derart freigegeben ist, dass eine Positionierung des Vorhangs in halb ausgefahrener Konfiguration erlaubt ist.

2. System nach Anspruch 1, **dadurch gekennzeichnet, dass** die transversale Achse (37) im Wesentlichen gemäß dem hinteren Rand (7) angeordnet ist, wobei die erste Richtung seitlich auf das System von links gesehen dem Uhrzeigersinn entspricht.

3. System nach einem der Ansprüche 1 oder 2, **dadurch gekennzeichnet, dass** die Randleiste (9) mit den Verhakungsmitteln (10) rotierend gekoppelt ist, wobei die Mittel eingerichtet sind, damit ihre Rotation in eine Richtung oder in die andere entweder ihr Enthaken oder ihre Freigabe bewirkt, um sich in ihre vorgerückte Position verlagern zu können.

4. System nach einem der Ansprüche 1 bis 3, **dadurch gekennzeichnet, dass** die Struktur (50), seitlich beiderseits des Fachs angeordnet, umfasst:
- eine seitliche Holzverkleidung (3) des Fachs,
- einen Heckfensterpfosten (4),
- einen Arm (12), der gemäß einer ersten transversalen Achse (13) auf dem Pfosten rotierend angebracht ist, wobei sich die Achse über dem Holz befindet, wobei der Arm ein erstes Rotationsende (14) und ein zweites Ende (15) umfasst, das mit einem gegenseitigen Verhakungsmittel (16) versehen ist,
- eine Vorrichtung (35) zur reversiblen Verriegelung des Arms in abgesenkter Position, wodurch eine Positionierung des reziproken Mittels im hinteren Teil des Holzes (3) derart gewährleistet ist, dass, wenn das Mittel (10) und das reziproke Mittel (16) miteinander zusammenwirken, eine Positionierung des Verhakungsmittels in zurückgesetzter Position und des Vorhangs in ausgefahrener Konfiguration gewährleistet ist, wobei die Verriegelungsvorrichtung derart deaktivierbar ist, dass eine Verlagerung des Arms in angehobene Position erlaubt ist, um eine Positionierung des Verhakungsmittels in vorgerückter Position und des Vorhangs in halb ausgefahrener Konfiguration durchzuführen.

5. System (1) nach den Ansprüchen 3 und 4, **dadurch gekennzeichnet, dass** es seitlich beiderseits die folgenden Merkmale aufweist:
- das Verhakungsmittel (10) liegt in Form eines abgeflachten Fingers vor, der transversal aus der Randleiste (9) hervorragt und an der Randleiste rotierend gekoppelt ist,
- das reziproke Verhakungsmittel (16) liegt in Form eines Elements (36) vor, das gemäß einer benachbarten transversalen Achse (37) in einer Aufnahme (38) rotierend angebracht ist, die im zweiten Ende (15) vorgesehen ist und in das Innere des Fachs ausmündet,
- das Element umfasst einen Empfangsschlitz (39) des Fingers, wobei der Schlitz in das Innere des Fachs ausmündet,
- der Schlitz weist eine erste radiale Öffnung (40) auf, wobei die Aufnahme eine zweite radiale Durchgangsöffnung (41) des Fingers in die erste Öffnung umfasst,
- der Schlitz und der Finger sind derart bemessen, dass sie sich rotierend koppeln, wenn der Finger in dem Schlitz angeordnet ist,
- das Element wird von einem Federmittel beansprucht, um eine winklige Blockierposition des Fingers anzunehmen, in welcher die erste Öffnung zumindest teilweise von der Wand der Aufnahme verschlossen ist.

6. System nach Anspruch 5, **dadurch gekennzeichnet, dass** das Federmittel das Element (36) derart beansprucht, dass die erste Öffnung (40) von der Wand der Aufnahme (38) nur teilweise verschlossen wird, wobei die erste Öffnung eine Form aufweist, die eingerichtet ist, um zu Beginn des Einführens des Fingers in den Schlitz (39) eine Rotation des Elements (36) durchzuführen, wodurch sie frei gemacht wird, um den Durchgang des Fingers zu erlauben, wobei der einmal eingeführte Finger im Schlitz durch Rückkehr des Elements in Blockierposition blockiert.

7. System nach einem der Ansprüche 5 oder 6, **dadurch gekennzeichnet, dass** die Verriegelungsvorrichtung (35) umfasst:
- einen Haken (43), der - zumindest teilweise - mit dem Element (36) rotierend fest verbunden ist, wobei der Haken nach unten zeigt und von dem Element radial nach hinten hervorsteht,
- eine Kerbe (44), die hinten im Holz (3) angeordnet ist, wobei der Haken in die Kerbe eingreift, wenn die Vorrichtung aktiviert ist, wobei die Deaktivierung der Vorrichtung durch Inrotationversetzen des Elements erfolgt.

8. System nach Anspruch 7, **dadurch gekennzeichnet, dass** das Federmittel zwischen dem Arm (12) und der ersten Rotationsachse (13) angeordnet ist, wobei der Arm in Bezug auf die Achse radial ausschlagend derart angebracht ist, dass das zweite Ende (15) von der Achse beabstandend beansprucht wird, wobei das Element (36) beansprucht wird, um durch Abstützung des Hakens (43) auf der Kerbe (44) die winklige Blockierposition einzunehmen.

## Claims

1. System (1) for covering a luggage compartment of a motor vehicle, said system comprising a luggage cover (2) and a structure (50) laterally surrounding said luggage cover, said luggage cover comprising:
- a retractable flexible curtain (5) comprising a front edge (6) and a rear edge (7),
- a device for returning (8) said associated curtain to said front edge, such that said curtain is mobile between a retracted storage configuration and a deployed configuration for covering luggage, said device being mounted at the front of said structure,
- an associated rigidifying flap (9) along said rear edge, said flap being provided with two respective side fastening means (10),
said structure being arranged to make it possible to fasten said means according to a remote position, corresponding to said deployed configuration, and according to an advanced position, corresponding to a semi-deployed configuration of said curtain, said system being **characterised in that**:
- said flap is generally plate-shaped of which the rear edge has a curve intended to mould the shape of the hatch of said vehicle, so as to ensure an optimal occultation of the luggage,
- when said means are fastened in the remote position, said flap can be actuated in rotation about a transversal axis (37), by vertical support exerted on it:
-- in a first direction, driving said uncoupling means to make it possible for a return of said curtain in the retracted configuration,
-- in a second opposite direction, releasing a movement of said means towards the advanced position thereof, so as to make it possible for a positioning of said curtain in the semi-deployed configuration.

2. System according to claim 1, **characterised in that** the transversal axis (37) is arranged substantially along the rear edge (7), the first direction corresponding to the clockwise direction in the side view of said system through the left.

3. System according to one of claims 1 or 2, **characterised in that** the flap (9) is coupled in rotation with the fastening means (10), said means being arranged such that the rotation thereof in one direction or in the other, drives either the uncoupling thereof, or the release thereof to be able to be moved towards the advanced position thereof.

4. System according to any one of claims 1 to 3, **characterised in that** the structure (50) comprises, arranged laterally on either side of the compartment:
- a side lining woodwork (3) of said compartment,
- a rear rack level (4),
- an arm (12) mounted in rotation about a first transversal axis (13) on said rack, said axis being located above said woodwork, said arm comprising a first rotating end (14) and a second end (15) provided with a reciprocal fastening means (16),
- a device for reversibly locking (35) said arm in the lowered position, ensuring a positioning of said reciprocal means in the rear portion of the woodwork (3) so as to ensure, when the means (10) and the reciprocal means (16) engage together, a positioning of said fastening means in the remote position and of said curtain in the deployed configuration, said locking device being able to be deactivated so as to make it possible for a movement of said arm into the raised position to achieve a positioning of said fastening means in the advanced position and of said curtain in the semi-deployed configuration.

5. System (1) according to claims 3 and 4, **characterised in that** it has laterally, on either side, the following features:
- the fastening means (10) is in the form of a flattened finger, protruding transversally from the flap (9) and coupled in rotation with said flap,
- the reciprocal fastening means (16) is in the form of an element (36) mounted in rotation, about an adjoining transversal axis (37), in a housing (38) provided in the second end (15) and opening towards the inside of the compartment,
- said element comprises a slot (39) for receiving said finger, said slot opening towards the inside of the compartment,
- said slot comprises a first radial opening (40), said housing comprising a second radial opening (41) for the passage of said finger to said first opening,
- said slot and said finger are sized so as to be coupled in rotation when said finger is arranged in said slot,
- said element is urged by a spring means to adopt an angular position for blocking said finger, where said first opening is obstructed, at least partially, by the wall of said housing.

6. System according to claim 5, **characterised in that** the spring means urges the element (36) such that the first opening (40) is only partially obstructed by the wall of the housing (38), said first opening having a shape arranged to achieve, at the start of introducing the finger in the slot (39), a rotation of the element (36), unblocking it, to make it possible for the passage of said finger, said finger once introduced being blocked in said slot by returning said element into the blocking position.

7. System according to one of claims 5 or 6, **characterised in that** the locking device (35) comprises:
- a hook (43) secured - at least partially - in rotation to the element (36), said hook being directed towards the bottom and radially protruding from said element towards the rear,
- a notch (44) arranged at the rear of the woodwork (3), said hook being inserted in said notch when said device is activated, the deactivation of said device being done by rotating said element.

8. System according to claim 7, **characterised in that** the spring means is arranged between the arm (12) and the first axis (13) of rotation, said arm being mounted in radial articulation with respect to said axis, such that the second end (15) is urged to spread from said axis, the element (36) being urged to adopt the angular blocking position by supporting the hook (43) on the notch (44).
